# EUROPEAN PATENT SPECIFICATION

(11) **EP 3 428 056 B1**
(45) Date of publication and mention of the grant of the patent: **25.03.2020**
(21) Application number: 17382460.8
(22) Date of filing: 13.07.2017
(51) Int. Cl.: B64C 3/20, B64C 3/26, B64C 5/02, B64C 1/00, B64C 5/06, B64C 3/18, B64C 1/06

(54) **BOX STRUCTURAL ARRANGENMENT FOR AN AIRCRAFT AND MANUFACTURING METHOD THEREOF**
KASTENSTRUKTURANORDNUNG FÜR EIN FLUGZEUG UND HERSTELLUNGSVERFAHREN DAFÜR
AGENCEMENT STRUCTURAL DE BOÎTE POUR AÉRONEF ET SON PROCÉDÉ DE FABRICATION

(43) Date of publication of application: 16.01.2019
(73) Proprietor: Airbus Operations, S.L., 28906 Getafe (Madrid) (ES)
(72) Inventor: ARANA HIDALGO, Alberto, 28906 Getafe (Madrid) (ES); RODRIGUEZ URBINA, Luis Manuel, 28906 Getafe (Madrid) (ES)
(74) Representative: Herrero & Asociados, S.L.

(56) References cited:
- EP-A2- 2 735 503
- WO-A2-2010/116170
- GB-A- 1 097 481
- US-A- 5 332 178
- US-A1- 2009 218 450
- US-A1- 2010 065 687
- US-A1- 2016 129 985

## Description

### Object of the invention

The present invention refers to a new box structural arrangement for an aircraft, in particular, to be used in a wing, a horizontal tail plane (HTP) and a vertical tail plane (VTP) of an aircraft.

More in particular, it is an object of the invention to provide a box structural arrangement that eases installation and maintenance tasks in the aircraft, allowing that connections/bifurcations of electric and hydraulic connections are performed from outside the structure without having to provide accesses to its interior.

Another object of the invention is to provide a more reliable box for an aircraft that is capable of reducing the fatigue suffered by traditional boxes that are conventionally attached at discrete support points.

The invention also refers to a method for manufacturing such a box structural arrangement.

### Background of the invention

The use of composite materials formed by an organic matrix and unidirectionally orientated fibres, such as Carbon Fibre Reinforced Plastic (CFRP), in the manufacture of structural components of an aircraft, such as wings, HTP, VTP, etc., is well known in the aeronautical industry.

It is also well known that, to provide hydraulic and/or electrical supply in the aircraft, pipeline and harness installations are required throughout the aircraft.

Typically, these installations are done by connecting pipelines and harnesses at discrete points of structural components of the aircraft.

Usually, these pipelines/harnesses follow specific routes to reach the locations where a supply connection is required. For that, these installations frequently require the perforation of several structural components of the aircraft.

PCT patent application WO2010/116170 A2 discloses a wing structure comprising an upper covering, a lower covering, and a spar, wherein said wing structure is arranged to contain fuel in a fuel containment area between the upper and lower coverings on one side of a spar web.

US patent application US2009/0218450 A1 discloses a fitting for pivotally connecting an aerodynamic control element to an aircraft structure, and a method of installing a control element using such a fitting.

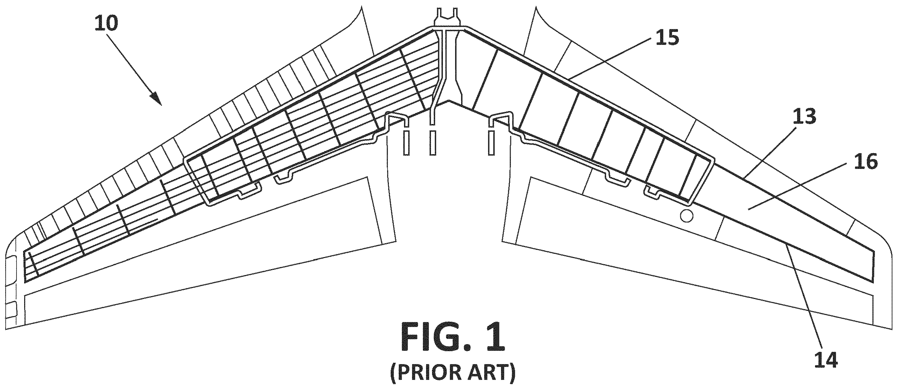

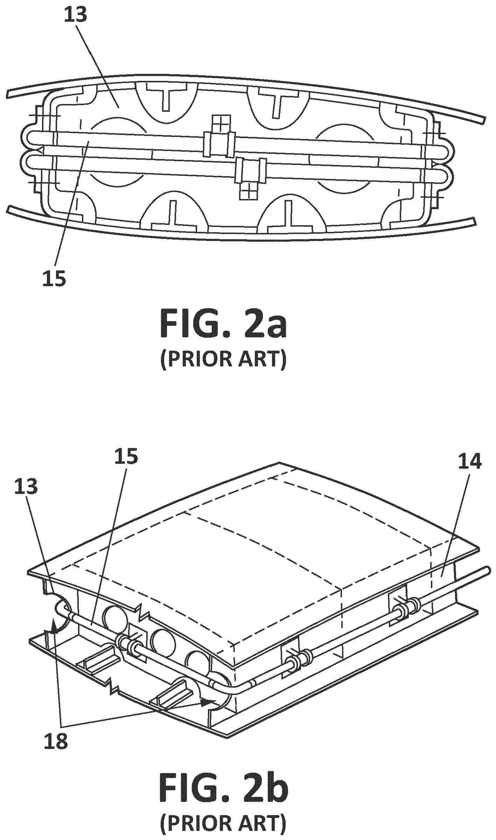

Figures 1 and 2 shows a conventional HTP (10) equipped with a hydraulic pipeline (15). As shown, the hydraulic pipeline (15) follows a longitudinal (spanwise) direction and crosses the HTP lateral boxes (16), causing openings (18) in the front (13) and rear HTP spars (14). Figure 2 shows a front view (Figure 2a) and a perspective view (Figure 2b) of one of the HTP lateral boxes (16) of Figure 1 in which the hydraulic pipeline (15) is shown crossing the front (13) and rear HTP spars (14).

These ad hoc routing complicates the installation, inspection or removal of the pipes/wiring, and also the access to surrounding elements.

Further, these routing affects aerodynamic and load bearing behavior of the components, since access panels (service doors) have to be provided in the covers for reaching these pipelines/harnesses installations.

It would therefore be desirable to provide technical means that simplify installation, inspection and removal of pipelines and harnesses in structural components of the aircraft.

### Summary of the invention

The present invention overcomes the above mentioned drawbacks by providing a box structural arrangement for an aircraft that simplifies the installation and maintenance tasks when pipes/lines/wirings have to be conducted through structural components of the aircraft.

One aspect of the present invention refers to a box structural arrangement for an aircraft that comprises a first and second composite layers, at least one spar web extended between opposite edges of the first and second composite layers along a longitudinal direction, and a conduit piece extended between opposite edges of the first and second composite layers, and having a hollow section that comprises at least one conduit dimensioned to receive pipes or harnesses and surrounded by a resilient material. The conduit piece is mounted on the spar web to provide a channeled box structural arrangement.

Thus, the invention provides a new box arrangement with a channeled designed to internally conduct pipelines and/or harnesses required for providing electrical or hydraulic supply in the aircraft. With this design, the invention minimizes the drilling of structural components of the aircraft to enable the passage of pipelines and/or harnesses through them.

Further, this channeled configuration allows connections/bifurcations are done from outside the integrated structure, which increase the reliability and integrity of the installation, and minimize the potential hydraulic leakages.

In addition, this box arrangement is designed to attenuate the vibration or fatigue effects experienced by traditional box arrangements, which are equipped with discrete points of support for the passage of pipelines and/or harnesses. On the contrary, the invention provides a continuous support spreading loads through a larger area by mounting the conduit piece on the spar web, which extends along the first and second composite layers a longitudinal direction.

Another aspects of the invention refers to a horizontal tail plane, a wing, and a vertical tail plane that comprises a box structural arrangement as described above.

Finally, another aspect of the invention refers to a method for manufacturing a box structural arrangement for an aircraft, comprising the steps of providing a first and a second layer of composite material and at least one spar web extended between opposite edges of the first and second composite layers, arranging the spar web between opposite edges of the first and second composite layers along a longitudinal direction, providing a conduit piece extended between opposite edges of the first and second composite layers and having a hollow section comprising at least one conduit dimensioned to receive pipes or harnesses and surrounded by a resilient material, and mounting the conduit piece on the spar web to form a channeled box structural arrangement.

The method of the invention provides a simple way of producing reliable boxes, which are specially designed to simplify the installation of pipelines and harnesses throughout the aircraft.

### Brief description of the drawings

For a better comprehension of the invention, the following drawings are provided for illustrative and non-limiting purposes, wherein:
Figure 1 shows a schematic view of a conventional HTP equipped with a hydraulic pipeline that crosses both HTP lateral boxes.
Figure 2 shows a schematic front view (drawing A) and perspective view (drawing B) of a box structural arrangement of one the HTP lateral boxes of Figure 1.
Figure 3 shows a schematic front view (drawing A) and perspective view (drawing B) of a box structural arrangement for an aircraft, according to a preferred embodiment of the present invention.
Figure 4 shows a perspective view of the conduit piece (drawing A) and the conduit piece mounted on the spar web (drawing B), according to a preferred embodiment of the present invention.
Figure 5 shows a schematic perspective view (drawing A) of an HTP equipped with the box structural arrangement of the present invention, and a cross sectional view (drawing B) of the A-A' axis depicted in drawing A.

### Preferred embodiment of the invention

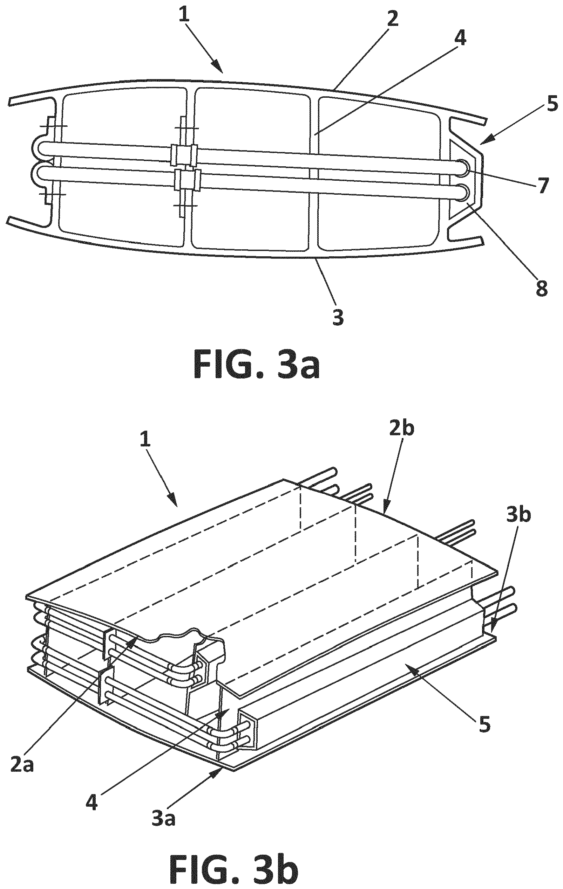

Figures 3a and 3b show a box structural arrangement (1) for an aircraft according to a preferred embodiment. According to the invention, the box structural arrangement (1) comprises first (2) and second composite layers (3), at least one spar web (4) transversely arranged between the first (2) and second composite layers (3), and a conduit piece (5) mounted on the at least one spar web (4).

The spar web (4) is extended between opposite edges (2a, 2b, 3a, 3b) of the first and second composite layers (2, 3) following a longitudinal direction. Thus, the spar web (4) has substantially the same length as the first (2) and second composite layers (3) to provide a continuous support to the conduit piece (5).

The conduit piece (5) is also extended between opposite edges (2a, 2b, 3a, 3b) of the first and second composite layers (2, 3). Thus, the conduit piece (5) has similar (or same) length as the spar web (4) to provide continuous encapsulation (and support) for the pipes or harnesses (19) along the box structural arrangement (1).

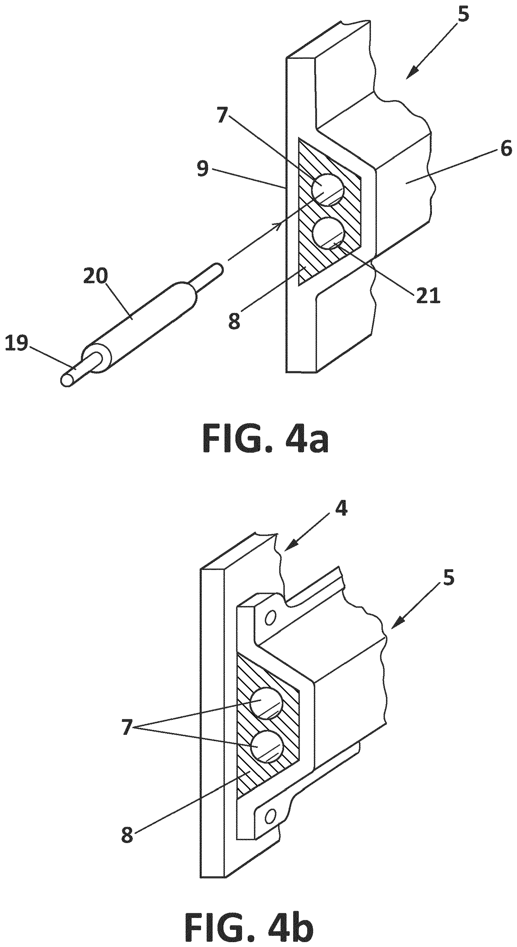

As shown in Figures 4a and 4b, the hollow section (6) of the conduit piece (5) encloses two conduits (7) (channels or canals) surrounded by a resilient material (8). The conduits (7) are dimensioned to receive pipes or harnesses (19), which will be preferably coated by a hard cover (20) to provide rigidity and an easy insertion into the conduits (7).

Preferably, the conduits (7) may include a foam bed (21) to ease the introduction of pipes or harnesses (19).

As shown in Figures 4a and 4b, the conduit piece (5) preferably has an omega cross section with a flat mounting surface (9) to facilitate its coupling to the spar web (4).

Preferably, the resilient material (8) consists of foam or plastic.

According to another aspect, the invention refers to a horizontal tail plane (10) comprising the box structural arrangement (1) described above.

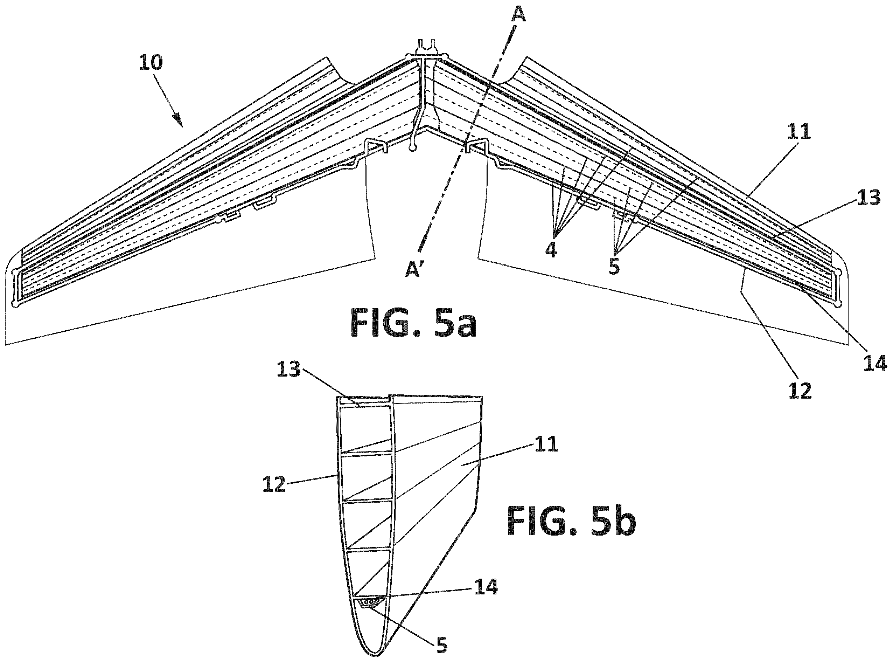

Figures 5a and 5b show a perspective and cross sectional view of a horizontal tail plane (10). The horizontal tail plane (10) has upper (11) and lower skins (12), and forward (13) and rear spars (14) arranged along a spanwise direction. According to the invention, the horizontal tail plane (10) further comprises the box structural arrangement (1) described above, wherein the upper and lower skins (11, 12) comprises the first (2) and second composite layers (3), and wherein at least one conduit piece (5) is mounted on each one of the forward (13) and the rear spars (14).

As shown, the conduit piece (5) and the spar web (4) are preferably extended between the shortest opposite edges of the first and second composite layers (2, 3) following thus a spanwise direction.

The invention provides an alternative installation concept that offers a clean and smooth surface for aerodynamic purposes. The potential extra weight of the conduit piece till the end of the stabilizer is compensated with the aerodynamic benefit of such a clean surface.

Similarly, the invention further refers to a wing and a vertical tail plane that comprises a box structural arrangement as described.

The invention finally refers to a method for manufacturing a box structural arrangement (1) for an aircraft as described above. The method comprises the steps of:
providing a first and a second layer of composite material (2, 3),
providing at least one spar web (4) extended between opposite edges (2a, 2b, 3a, 3b) of the first and second composite layers (2, 3),
arranging the spar web (4) between opposite edges (2a, 2b, 3a, 3b) of the first and second composite layers (2, 3) along a longitudinal direction,
providing a conduit piece (5) extended between opposite edges (2a, 2b, 3a, 3b) of the first and second composite layers (2, 3) and having a hollow section (6) comprising at least one conduit (7) dimensioned to receive pipes or harnesses and surrounded by a resilient material (8),
mounting the conduit piece (5) on the spar web (4) to form a channeled box structural arrangement (1).

The large and single pieces of pipelines/harnesses may be easily installed from one side in the factory. In case of stabilizers (HTP, VTP) connections/bifurcations can be done from outside their boxes, removing then the need for access panels (service doors) in the middle of these components. The potential extra weight is compensated with the cleanness of the surface that leads to aerodynamic benefits.

## Claims

1. Box structural arrangement (1) for an aircraft comprising:
- a first (2) and second composite layers (3),
- at least one spar web (4) extended between opposite edges (2a, 2b, 3a, 3b) of the first and second composite layers (2, 3) along a longitudinal direction, and
- a conduit piece (5) extended between the opposite edges (2a, 2b, 3a, 3b) of the first and second composite layers (2, 3) and mounted on the spar web (4) to provide a channeled box structural arrangement (1);
**characterized in that** the conduit piece (5) has a hollow section (6) comprising at least one conduit (7) dimensioned to receive pipes or harnesses and surrounded by a resilient material (8).

2. Box structural arrangement (1) for an aircraft, according to claim 1, wherein the conduit (7) of the conduit piece (5) has a foam bed (21) to ease the introduction of pipes or harnesses (19).

3. Box structural arrangement (1) for an aircraft, according to any preceding claims, wherein the conduit piece (5) has an omega cross section with a flat mounting surface (9).

4. Box structural arrangement for an aircraft, according to any preceding claims, wherein the resilient material (8) consists of foam or plastic.

5. Horizontal tail plane (10) for an aircraft, the horizontal tail plane (10) having upper (11) and lower skins (12), and forward (13) and rear spars (14) arranged along a spanwise direction, the horizontal tail plane (10) further comprising a box structural arrangement (1) according to any of claims 1-4, wherein the upper and lower skins (11, 12) comprises the first (2) and second composite layers (3), and wherein at least one conduit piece (5) is mounted on each one of the forward (13) and the rear spar (14).

6. Wing for an aircraft, the wing having upper and lower skins, and forward and rear spars arranged along a spanwise direction, the wing further comprising a box structural arrangement (1) according to any of claims 1-4, wherein the upper and lower skins comprises the first and second composite layers, and wherein at least one conduit piece is mounted on each one of the forward and the rear spar.

7. Vertical tail plane for an aircraft, the vertical tail plane having upper and lower skins, and forward and rear spars arranged along a spanwise direction, the vertical tail plane further comprising a box structural arrangement (1) according to any of claims 1-4, wherein the upper and lower skins comprises the first and second composite layers, and wherein the at least one conduit piece is mounted on each one of the forward and the rear spar.

8. Method for manufacturing a box structural arrangement (1) for an aircraft, comprising the steps of:
providing a first and a second layer of composite material (2, 3),
providing at least one spar web (4) extended between opposite edges (2a, 2b, 3a, 3b) of the first and second composite layers (2, 3),
arranging the spar web (4) between opposite edges (2a, 2b, 3a, 3b) of the first and second composite layers (2, 3) along a longitudinal direction,
**characterized int that** the method further comprises providing a conduit piece (5) extended between opposite edges (2a, 2b, 3a, 3b) of the first and second composite layers (2, 3) and having a hollow section (6) comprising at least one conduit (7) dimensioned to receive pipes or harnesses and surrounded by a resilient material (8),
mounting the conduit piece (5) on the spar web (4) to form a channeled box structural arrangement (1).

## Patentansprüche

1. Kastenstrukturanordnung (1) für ein Luftfahrzeug mit:
- einer ersten (2) und einer zweiten Verbundschicht (3),
- mindestens einem Sparrensteg (4), der sich zwischen gegenüberliegenden Rändern (2a, 2b, 3a, 3b) der ersten und der zweiten Verbundschicht (2, 3) in einer Längsrichtung erstreckt, und
- einem Leitungsteil (5), das sich zwischen den gegenüberliegenden Rändern (2a, 2b, 3a, 3b) der ersten und der zweiten Verbundschicht (2, 3) erstreckt und an dem Sparrensteg (4) zur Bildung einer mit einem Kanal versehenen Kastenstrukturanordnung (1) angebracht ist;
**dadurch gekennzeichnet, dass** das Leitungsteil (5) ein Hohlprofil (6) mit mindestens einer Leitung (7) aufweist, die zum Aufnehmen von Rohren oder Kabelsträngen bemessen und von einem elastischen Material (8) umgeben ist.

2. Kastenstrukturanordnung (1) für ein Luftfahrzeug nach Anspruch 1, bei welcher die Leitung (7) des Leitungsteils (5) ein Schaumstoffbett (21) aufweist, um das Einführen von Rohren oder Kabelsträngen (19) zu erleichtern.

3. Kastenstrukturanordnung (1) für ein Luftfahrzeug nach einem der vorhergehenden Ansprüche, bei welcher das Leitungsteil (5) einen omegaförmigen Querschnitt mit einer ebenen Montagefläche (9) aufweist.

4. Kastenstrukturanordnung (1) für ein Luftfahrzeug nach einem der vorhergehenden Ansprüche, bei welcher das elastische Material (6) aus Schaumstoff oder Kunststoff besteht.

5. Kastenstrukturanordnung (1) für ein Luftfahrzeug, wobei die horizontale Heckebene (10) eine obere (11) und eine untere Haut (12) und vordere und hintere Sparren (14), die in Spannweitenrichtung angeordnet sind, aufweist, wobei die horizontale Heckebene (10) ferner eine Kastenstrukturanordnung (1) nach einem der Ansprüche 1 - 4 aufweist, wobei die obere und die untere Haut (11, 12) die erste (2) und die zweite Verbundschicht (3) aufweisen, und wobei mindestens ein Leitungsteil (5) an sowohl dem vorderen (13), als auch dem hinteren Sparren (14) angebracht ist.

6. Tragfläche für ein Luftfahrzeug, wobei die Tragfläche eine obere und eine untere Haut und vordere und hintere Sparren, die in Spannweitenrichtung angeordnet sind, aufweist, wobei die Tragfläche ferner eine Kastenstrukturanordnung (1) nach einem der Ansprüche 1 - 4 aufweist, wobei die obere und die untere Haut die erste und die zweite Verbundschicht aufweisen, und wobei mindestens ein Leitungsteil an sowohl dem vorderen, als auch dem hinteren Sparren angebracht ist.

7. Vertikale Heckebene für ein Luftfahrzeug, wobei die vertikale Heckebene eine obere und eine untere Haut und vordere und hintere Sparren, die in Spannweitenrichtung angeordnet sind, aufweist, wobei die vertikale Heckebene ferner eine Kastenstrukturanordnung (1) nach einem der Ansprüche 1 - 4 aufweist, wobei die obere und die untere Haut die erste und die zweite Verbundschicht aufweisen, und wobei mindestens ein Leitungsteil an sowohl dem vorderen, als auch dem hinteren Sparren angebracht ist.

8. Verfahren zur Herstellung einer Kastenstrukturanordnung (1) für ein Luftfahrzeug, mit den Schritten:
Vorsehen einer ersten und einer zweiten Schicht (2, 3) aus Verbundmaterial;
Vorsehen mindestens eines Sparrenstegs (4), der sich zwischen gegenüberliegenden Rändern (2a, 2b, 3a, 3b) der ersten und der zweiten Verbundschicht (2, 3) erstreckt,
Anordnen der Sparrenstrebe (4) zwischen gegenüberliegenden Rändern (2a, 2b, 3a, 3b) der ersten und der zweiten Verbundschicht (2, 3) in einer Längsrichtung, **dadurch gekennzeichnet, dass** das Verfahren ferner aufweist: das Vorsehen eines Leitungsteils (5), das sich zwischen gegenüberliegenden Rändern (2a, 2b, 3a, 3b) der ersten und der zweiten Verbundschicht (2, 3) erstreckt und ein Hohlprofil (6) mit mindestens einer Leitung (7) aufweist, die zum Aufnehmen von Rohren oder Kabelsträngen bemessen und von einem elastischen Material (8) umgeben ist;
das Befestigen des Leitungsteils (5) an dem Sparrensteg (4) zur Bildung einer mit einem Kanal versehenen Kastenstrukturanordnung (1).

## Revendications

1. Agencement structural en caisson (1) pour aéronef comprenant :
- des première (2) et seconde couches composites (3),
- au moins une âme de longeron (4) s'étendant entre des bords opposés (2a, 2b, 3a, 3b) des première et seconde couches composites (2, 3) le long d'une direction longitudinale, et
- une pièce de conduite (5) s'étendant entre les bords opposés (2a, 2b, 3a, 3b) des première et seconde couches composites (2, 3) et montée sur l'âme de longeron (4) pour fournir un agencement structural en caisson (1) canalisé ;
**caractérisé en ce que** la pièce de conduite (5) a une section creuse (6) comprenant au moins une conduite (7) dimensionnée pour recevoir des tuyaux ou des faisceaux et entourée d'un matériau résilient (8).

2. Agencement structural en caisson (1) pour aéronef, selon la revendication 1, dans lequel la conduite (7) de la pièce de conduite (5) a un lit de mousse (21) pour faciliter l'introduction de tuyaux ou de faisceaux (19).

3. Agencement structural en caisson (1) pour aéronef, selon l'une quelconque des revendications précédentes, dans lequel la pièce de conduite (5) a une section transversale en oméga ayant une surface de montage plate (9) .

4. Agencement structural en caisson pour aéronef, selon l'une quelconque des revendications précédentes, dans lequel le matériau résilient (8) est constitué de mousse ou de plastique.

5. Stabilisateur horizontal (10) pour aéronef, le stabilisateur horizontal (10) ayant des revêtements supérieur (11) et inférieur (12), et des longerons avant (13) et arrière (14) agencés dans la direction de l'envergure, le stabilisateur horizontal (10) comprenant en outre un agencement structural en caisson (1) selon l'une quelconque des revendications 1 à 4, dans lequel les revêtements supérieur et inférieur (11, 12) comprennent les première (2) et seconde (3) couches composites, et dans lequel au moins une pièce de conduite (5) est montée sur chacun des longerons avant (13) et arrière (14).

6. Aile pour aéronef, l'aile ayant des revêtements supérieur et inférieur, et des longerons avant et arrière agencés dans la direction de l'envergure, l'aile comprenant en outre un agencement structural en caisson (1) selon l'une quelconque des revendications 1 à 4, dans lequel les revêtements supérieur et inférieur comprennent les première et seconde couches composites, et dans lequel au moins une pièce de conduite est montée sur chacun des longerons avant et arrière.

7. Stabilisateur vertical pour aéronef, le stabilisateur vertical ayant des revêtements supérieur et inférieur, et des longerons avant et arrière agencés le long de la direction de l'envergure, le stabilisateur vertical comprenant en outre un agencement structural en caisson (1) selon l'une quelconque des revendications 1 à 4, dans lequel les revêtements supérieur et inférieur comprennent les première et seconde couches composites, et dans lequel l'au moins une pièce de conduite est montée sur chacun des longerons avant et arrière.

8. Procédé de fabrication d'un agencement structural en caisson (1) pour aéronef, comprenant les étapes suivantes :
la fourniture d'une première et d'une seconde couche en matériau composite (2, 3),
la fourniture d'au moins une âme de longeron (4) s'étendant entre des bords opposés (2a, 2b, 3a, 3b) des première et seconde couches composites (2, 3),
l'agencement de l'âme de longeron (4) entre des bords opposés (2a, 2b, 3a, 3b) des première et seconde couches composites (2, 3) le long d'une direction longitudinale,
**caractérisé en ce que** le procédé comprend en outre la fourniture d'une pièce de conduite (5) s'étendant entre des bords opposés (2a, 2b, 3a, 3b) des première et seconde couches composites (2, 3) et ayant une section creuse (6) comprenant au moins une conduite (7) dimensionnée pour recevoir des tuyaux ou des faisceaux et
entourée d'un matériau résilient (8), le montage de la pièce de conduite (5) sur l'âme de longeron (4) pour former un agencement structural en caisson (1) canalisé.
